# EUROPEAN PATENT SPECIFICATION

(11) **EP 3 562 788 B1**
(45) Date of publication and mention of the grant of the patent: **16.09.2020**
(21) Application number: 17837914.5
(22) Date of filing: 14.11.2017
(51) Int. Cl.: C02F 9/00, C02F 1/28, C02F 1/42, C02F 1/70, C02F 1/76, C02F 1/72

(54) **METHOD FOR THE POTABILIZATION OF EFFLUENTS FROM BIOLOGICAL WWTPS**
VERFAHREN ZUR TRINKBARMACHUNG VON ABWASSER AUS BIOLOGISCHEN WWTPS
PROCÉDÉ RENDANT POTABLES DES EFFLUENTS DE WWTPS BIOLOGIQUES

(30) Priority: 27.12.2016 SI 201600313
(43) Date of publication of application: 06.11.2019
(73) Proprietor: Institut "Jozef Stefan", 1000 Ljubljana (SI); Zavod za Gradbenistvo Slovenije, 1000 Ljubljana (SI)
(72) Inventor: MLADENOVIC, Ana, 4220 Skofja Loka (SI); OPRCKAL, Primoz, 8212 Velika Loka (SI); MILACIC, Radmila, 1356 Dobrova (SI); SCANCAR, Janez, 1356 Dobrova (SI); VIDMAR, Janja, 5273 Col (SI); SEVER SKAPIN, Andrijana, 1358 Log pri Brezovici (SI); NADRAH, Peter, 1000 Ljubljana (SI); MAUKO PRANJIC, Alenka, 1230 Domzale (SI); SPRINZER, Mirko, 2201 Zgornja Kungota (SI)
(74) Representative: Jersan, Tatjana
(86) International application number: PCT/SI2017/050002
(87) International publication number: WO 2018/124972

(56) References cited:
- WO-A1-2005/075367
- JP-A- H 091 131
- US-A- 5 466 367
- Radmila Milacic ET AL: "The use of different zero-valent iron nanoparticles for the remediation of effluent water from a small biological wastewater treatment plant", , 5 October 2016 (2016-10-05), XP055456971, Retrieved from the Internet: URL:http://www.rusalca.si/uploads/rusalca- conference-ana-mladenovic-presentation.pdf [retrieved on 2018-03-06]
- Ana Mladenovic: "Nanoremediation of water from small wastewater treatment plants and reuse of water and solid remains for local needs", , 30 September 2017 (2017-09-30), XP055456896, Retrieved from the Internet: URL:http://www.rusalca.si/uploads/RusaLCA- Laymans-report-en.pdf [retrieved on 2018-03-06]

## Description

The invention relates to a process for the remediation of wastewater, i.e., for the production of drinking water. The process for obtaining of the latter is based on at least partially purified, municipal wastewater that is derived from households and obtained from a conventional, small biological wastewater treatment plant, subsequently referred to as an SBWTP, intended for the purification of conventional municipal wastewater, i.e., urban or household sewage.

The invention addresses the problem of how to remediate the municipal wastewater from households in a relatively short period of time, without using environmentally unfriendly substances, in an energy-efficient manner, so as to achieve the necessary physical, chemical and microbiological characteristics that are acceptable for drinking water.

The present invention represents a comprehensive solution for the cleaning of municipal wastewater from households, which is previously partially purified in a SBWTP, by using a combination of reduction and oxidation processes and filtration to achieve acceptable values for the parameters that define drinking water. The purified water is odourless, colourless, clear, with an acceptable taste, and does not have the tendency to foam. The obtained water has a conductivity of ≤ 2500 µS/cm, measured at 20 ° C, while the chemical oxygen demand (COD) is ≤ 5 mg O₂ / L.

In the text the term drinking water and the equivalent term water suitable for drinking are applied to water obtained by using the process of the invention, which is able to achieve all the required values for the water in terms of inorganic, organic, microbiological and other physico-chemical parameters.

The municipal wastewater from households is a form of contaminated water in which there are various organic and inorganic compounds. Because of the high content of dissolved ions, the municipal wastewater from households has a high electrical conductivity of up to 15000 µS / cm. The municipal wastewater from households has an average neutral or slightly alkaline, pH with values between 7.0 and 8.5. The indicative parameters for the presence of organic pollutants in water are the biochemical (BOD₅) and the COD. The average value of the COD in urban wastewater from households is from 200 to 600 mg O₂ / L, and the average value of BOD₅ is 250 mg O₂ / L.

The microbiological characteristics of the municipal wastewater from households are most often associated with the content of various micro-organisms, which mainly include bacteria and viruses. The microbiological parameters are given in units of the most probable number (MPN) / 100 mL or in colony forming units (CFU) / 100 mL. The average concentrations of the main indicator micro-organisms in urban wastewater are as follows: *Escherichia coli* 800,000 MPN / 100 mL, intestinal enterococci 3,000,000 MPN / 100 mL, *Clostridium perfringens* 50,000 CFU / 100 mL, coliform bacteria 20,000,000 MPN / 100 mL.

The municipal wastewater from households, which is first purified in a SBWTP, is not suitable for drinking or re-use with respect to human needs since the concentrations of certain pollutants or components in this water are too high. However, partially purified water represents the base or the starting material for further purification according to the method of remediation of the present invention. The water that is partially purified in the SBWTP for a maximum of 200 population equivalents must, for the purposes of further purification in the present invention, achieve COD and BOD₅ limit values as follows:
- COD ≤ 150 mg O₂ / L,
- BOD₅ ≤ 30 mg O₂ / L.

The maximum value for the water-conductivity parameter that is still acceptable at the SBWTP outflow, which is intended to operate with the remediation process of the present invention, is ≤ 9000 µS / cm when measured at 20 ° C.

The permissible values for inorganic substances in drinking water at the SBWTP outflow exceed the parameters for the ammonium ion, nitrate, nitrite, sulphate, and phosphate. Their maximum permissible values that can be contained in the water at the SBWTP outflow, which is foreseen for operation with the remediation process, which is the subject of this invention, are as follows: ammonium ion (NH₄⁺) ≤ 40 mg / L, nitrate (NO₃⁻) ≤ 20 mg / L, nitrite (NO₂⁻) ≤ 1.0 mg / L, sulphate (SO₄²⁻) ≤ 30 mg / L and phosphate (PO₄²⁻) ≤ 10 mg / L.

The acceptable average content of the micro-organisms, which are potentially dangerous for health, in the water at the outflow of the SBWTP, which is intended to be coupled with the remediation process of the present invention, is as follows: *Escherichia coli* ≤ 130,000 MPN / 100 mL, intestinal enterococci ≤ 25,000 MPN / 100 mL, *Clostridium perfringens* ≤ 850 CFU / 100 mL and coliform bacteria ≤ 700,000 MPN / 100 mL.

The described problematic parameters in the water at the outflow of the SBWTP are, after purification by the remediation process or in a remediation device, such that the water corresponds to the physical, chemical and microbiological requirements of drinking water, or do not exceed the values, which, according to the specifications of the zero-valent iron nanoparticles (nZVI), could not be reduced below the limit values for drinking water.

The state of the art with respect to the basic, conventional, cleaning technology for conventional municipal wastewater from households is an SBWTP. Such a device with its associated biological processes and simple sedimentation purifies the water to the extent that it meets the minimum standards for being released into the environment. In this way a large part of the water, which is an important resource, is lost, and with it the energy used for the primary and secondary wastewater treatment. Clean drinking water is an invaluable resource for mankind. Therefore, processes that can produce drinking water from wastewater with a relatively low energy consumption, in an environmentally friendly manner and at a low price, are of particular importance.

Membrane processes (N. P. Cheremisinoff, Handbook of Water and Waste Water Treatment Technologies, Woburn, 2002), pp. 335-371, operate on the basis of a pressure difference that pushes the contaminated water through pores with different sizes. Water-filtration methods (microfiltration, ultrafiltration, nano-filtration, and reverse osmosis) can remove bacteria, suspended particles and organic macromolecules from the water. Reverse osmosis is effective for desalination, while it is less effective for weak acids and bases and smaller organic molecules that might be present in the wastewater. The disadvantages of membrane processes are reflected mainly in the problems associated with blocked pores, the cost of membranes and the energy required to create the pressure during filtration.

The filtration methods include filtering through activated carbon films, which is a relatively effective process for the adsorption of organic and some inorganic pollutants. This method, like all filtration methods, is very susceptible to clogging and bacterial growth. Therefore, preliminary stages of wastewater treatment are required.

Chemical purification processes include the application of various water-purification elements and compounds. The most commonly used are chlorine (either as gaseous chlorine or in the form of a hypochlorite salt), iodine, silver, potassium permanganate and coagulation/flocculation agents such as FeCl₃, FeSO₄, Al₂(SO₄)₃ × 14H₂O, Ca(OH)₂, Na₂CO₃, etc. The chemicals can effectively disinfect the wastewater and eliminate a number of pollutants with the flocculation processes; however, many toxic and harmful decomposition products can be formed during this process of decomposition.

In addition to the aforementioned processes, advanced oxidation processes are also suitable for the treatment of wastewater. These include reactants such as hydrogen peroxide, Fe³⁺, Fe²⁺, TiO₂, ozone and ultraviolet light, all of which enable the oxidative degradation of pollutants. In this way it is only economic and reasonable to clean water that has a sufficiently small fraction of organic material, otherwise the consumption of expensive reactants would be too high.

Promising forms of water purification include the methods of nano-remediation, which is indicated by the numerous patent applications for methods based on the synthesis and use of nanoparticles for this purpose. The inventors Zhao and Xu (2007) describe in their patent a method for the preparation of stable nZVI and the use of these nanoparticles to reduce the level of pollution with inorganic pollutants. Moniwa et al. (2012) have patented a method for the selective removal of industrial wastewater oils by the adsorption of these oils onto the hydrophobic surface of nanoparticles with a magnetic core. Zhang et al. (2014) have patented single-phase and two-phase anaerobic reactors for scavenging with zero-valent iron. In 2014, Huang and Crews patented a method for cleaning wastewater using nanoparticles that can adsorb or otherwise bind pollutants. Fujieda et al. (2009) describe in their patent a method for purifying wastewater based on adsorption to magnetic particles with bound oleophylic and hydrophilic functional groups on the surface. The patent of Sainia et al. (2015) describes the preparation of a nanocomposite material and its use for the remediation of water as an adsorption agent for the removal of organic dyes. Farone et al. (2013) patented an invention for water remediation that includes a device for the use of various nanoparticles for water remediation involving several stages of filtration. Englehardt and Meeroff (2005) describe in their patent application a process for the remediation of wastewater based on the use of various ferrous materials and compounds

(Fe salts, Fe fillers, metal wool, Fe nanoparticles) for the remediation of water in a reaction vessel in the liquefied state while mixing and blowing air. Zhang (2009) describes the preparation of nZVI in the form of a dispersion in which the particles are stabilized by means of soybean processing products. The possibilities of using this dispersion for the remediation of water and earth are also described. Salam et al. (2014) patented a process for the preparation of a composite nanomaterial covering the precipitation of magnetic NiFe₂O₄ nanoparticles, and also the process of remediation for water contaminated with aniline by means of composite nanoparticles. This invention, which includes the use of composite superparamagnetic iron oxide nanoparticles for water remediation, was also patented by Stein (2009). Described is the preparation of composite nanoparticles with a modified surface, and the process of water remediation, which involves mixing the composite nanoparticles with the contaminated water and removing the nanoparticles with a magnetic field.

In document "The use of different zero-valent iron nanoparticles for the remediation of effluent water from a small biological wastewater treatment plant" (Rusalca conference, Radmila Milacic et al.) the use of different zero-valent Fe⁰ particles nZVI for the remediation of effluent water from a small biological wastewater treatment plant is described. In said article only chemical mechanisms and processes behind the use of three different types of nZVI for water remediation are disclosed. No further steps are provided to obtain water wherein the sum of all microbiological pollutants of *Escherichia coli,* intestinal enterococci, *Clostridium perfringens* and coliform bacteria in water is equal to 0.

In patent application No. WO 2005/075367 a method for water treatment which is used in an emergency case, like a flood, is disclosed. Water is first oxidized and disinfected with a composition comprising an oxidizing agent which is a mixture of potassium permanganate, zinc sulphate and organic acid, i.e. adipic acid, and then subjected to a mechanical filtration and passes through an array filtration columns in series. The thus purified water is admixed with another agent with a mineralizing activity to reach adequate hardness and then water runs over the bed of activated coal to remove the residual organic contaminants and reagents added in the purification process. After the active coal filtering water is disinfected with UV radiation.

The process described in the invention is a comprehensive solution for the cleaning of municipal wastewater from households, which was previously partially purified in an SBWTP, by using a combination of reduction and oxidation processes and filtration in order to achieve acceptable values for the parameters defining drinking water and do not worsen the values of parameters, which are already below the permissible limits. Municipal wastewater from households very rarely exceeds the allowed concentrations for heavy metals and problematic organic pollutants, as determined for drinking water, according to conducted research. The heavy metals in the water flowing into the SBWTP and out of the SBWTP never exceed the values such that they would not be able to be reduced below the value for drinking water using the device and process described in the invention.

In contrast to some of the methods described, the present invention uses environmentally friendly chemical agents. Furthermore, compared to most conventional water-purification technologies, the present invention is also more energy efficient.

The process for the cleaning or remediation of water from the SBWTP described in the invention represents an upgrade of the processes with respect to the conventional SBWTP. The partially purified water exiting from the SBWTP is pumped into a separate remediation system or remediation device.

For the purposes of this application, the meanings of the terms reactor, and reaction tank are equivalent. These are commonly used terms, the use of which is primarily related to the components of the remediation device; however, regardless of its size, the same procedure for remediation is the subject of the present invention.

The invention will be described below and presented in the following figures:
Figure 1 shows the upper limit of the average annual mean values that the SBWTP needs to achieve
Figure 2 shows a schematic view of the device suitable for the claimed process
Figure 3 shows the dependence of the disinfection efficiency with respect to the used concentration of nZVI
Figure 4 shows the dependence of the disinfection efficiency from the mixing duration during the nano-remediation step
Figure 5 shows the graph of the suspended Fe concentration after the remediation with respect to the duration of the settling time
Figure 6 shows the nZVI under a scanning electron microscope
Figure 7 shows the X-ray powder-diffraction pattern of the nZVI

The water obtained from the SBWTP is the starting material that is intended for further treatment with the water-remediation process according to the invention.

The municipal wastewater from households, partially cleaned up in the SBWTP, for up to 200 population equivalents, which is planned to work with the remediation procedure according to the invention, must achieve the following limit values for COD and BOD₅: COD ≤ 150 mg O₂/L, BOD₅ ≤ 30 mg O₂/L.

The highest, but still acceptable, value for the conductivity parameter for the water at the outflow of the SBWTP is ≤ 9000 µS/cm at 20 ° C.

The permissible values for inorganic pollutants in drinking water at the outflow of the SBWTP exceed the parameters with respect to ammonium ion, nitrate, nitrite, sulphate, and phosphate. The highest values that are allowed at the outflow of the SBWTP that will work together with the remediation process are as follows: ammonium ion (NH₄⁺) ≤ 40 mg/L, nitrate (NO₃⁻) ≤ 20 mg/L, nitrite (NO₂⁻) ≤ 1.0 mg/L, sulphate (SO₄²⁻) ≤ 30 mg/L and phosphate (PO₄²⁻) ≤ 10 mg/L.

The average annual levels with respect to health for the potentially dangerous micro-organisms in the water at the outflow of the SBWTP envisaged for the operation following the remediation procedure are as follows: *Escherichia coli* ≤ 130,000 MPN / 100 mL, intestinal enterococci ≤ 25,000 MPN / 100 mL, *Clostridium perfringens* ≤ 850 CFU / 100 mL and coliform bacteria ≤ 700,000 MPN / 100 mL.

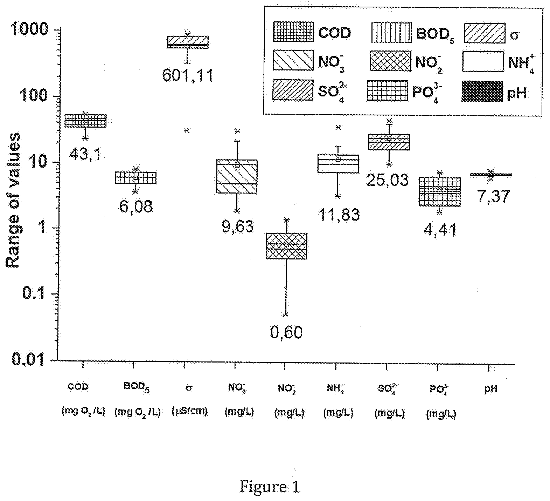

In the water at the outflow of the SBWTP, which is the basis for the remediation process, the annual mean values of the exceeded permissible parameters for drinking water are shown in Fig. 1, and are at the same time the upper limit of annual mean values that the SBWTP needs to achieve.

The process of remediation according to the invention involves the following steps: nano-remediation, treatment with oxidant, ion exchange and filtration.

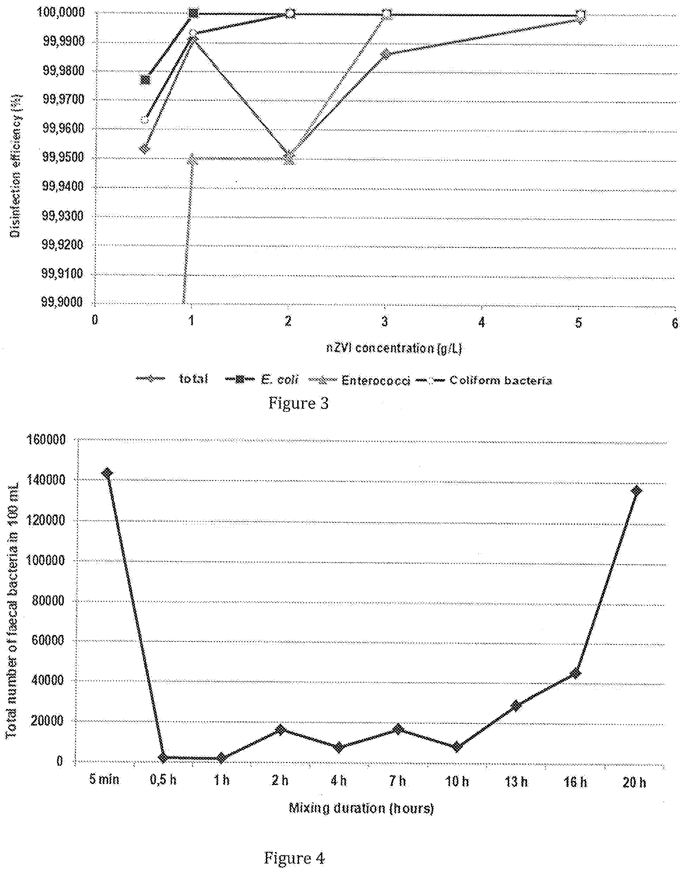

The first phase of the remediation process is nano-remediation with the nZVI. At this stage at least 98% of the microbiological pollutants are removed from the water so that the sum of the microbiological pollutants of *Escherichia coli,* intestinal enterococci, *Clostridium perfringens* and coliform bacteria is reduced to ≤ 2000 units. The individual nZVI used in the process must have a specific surface area of at least 25 m²/g and their average size must not exceed 80 nm. The specific surface area and the size of the nanoparticles are to a large extent determining the remediation capabilities. The nZVI suspension is added to the water from the outflow of the SBWTP so that their concentration is between ≥ 0.25 and ≤ 2 g / L in order to achieve the best purification efficiency, in particular disinfection, as shown in Fig. 3. Disinfection is one of the indicators for effectiveness and must achieve an at least 98 % removal of the microbiological pollutants in the water from the SBWTP. For nano-remediation, a pre-prepared aqueous suspension of nZVI is used, in which the nanoparticle content is 20 wt.%.

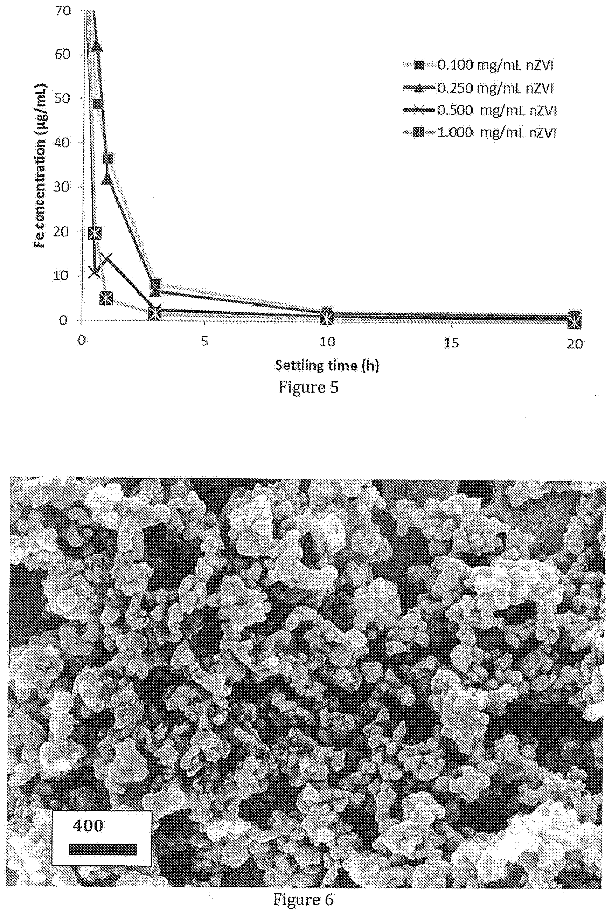

The addition of the suspension of nZVI is followed by mixing to ensure the complete oxidation of the nZVI, which is reflected in the change in the colour of the water suspension with added nZVI from black to red-brown. The mixing time is between ≥ 6 and ≤ 10 hours. This ensures that the sum of the microbiological pollutants of *Escherichia coli,* intestinal enterococci, *Clostridium perfringens* and coliform bacteria is reduced to ≤ 2000 units, which can remain after the nano-remediation, or a ≥ 98 % reduction in the initial microbiological pollutants. The primary purpose of nano-remediation is to reduce the concentration of bacteria; therefore, microbiological parameters are the key data with respect to the suitability of the selected nZVI concentration and the mixing time for the remediation of the selected water. The time is determined on the basis of the best effect of disinfection with respect to the mixing time after the addition of nZVI, as shown in Fig. 4. During mixing, the nZVI are converted into non-reactive, micrometre-sized particles of iron oxides and hydroxides. At the end of the mixing the settling phase is followed, when the micrometre assemblies of iron oxides and hydroxides, i.e., the nZVI residues, are settled on the bottom of the basin in the form of a waste sediment. The resting or settling time should be ≥ 3 hours and ≤ 10 hours in order to achieve the maximum level of water clarity and to remove the suspended particles through settling. The settling ensures that the concentration of nZVI in the partially remediated water is ≤ 10 mg / L, as shown in Fig. 5. In this way the nano-remediation process comes to completion.

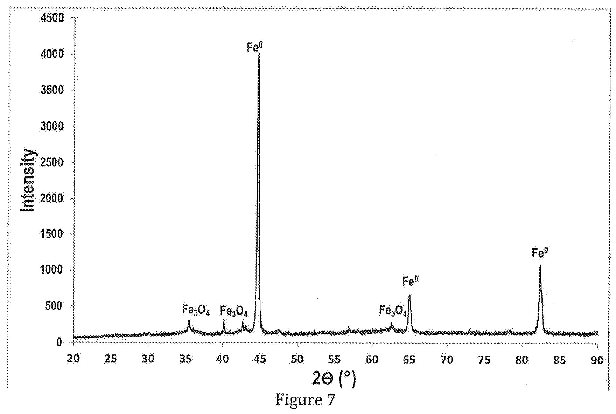

The nZVI, shown in Fig. 6, have a characteristic core-shell structure. The core of the particles is formed of a body-centred cubic crystalline form of elemental α-Fe, or the zero-valent Fe⁰ iron, which is a reactive component. The shells consist of magnetite (Fe₃O₄) and amorphous iron hydroxides, as can be seen from the X-ray powder-diffraction analysis in Fig. 7. With the progress of passivation of the particles, the content of the reactive component Fe⁰ decreases and increases the content of non-reactive iron hydroxides. Because the zero-valent iron is assuring the remediation of the water, the nanoparticles must contain at least 80 wt.% of the reactive Fe⁰ component. The Fe⁰ content in the nanoparticles can be determined with sufficient accuracy by using the H₂-emission technique.

When the nZVI is in contact with water, oxidation of Fe⁰ to Fe²⁺ occurs, followed by emission of gaseous hydrogen and an increase in the alkalinity of the water (reaction (1)).

2Fe⁰₍ₛ₎ + 2H₂O₍ₗ₎ → Fe²⁺_{(aq)} + H_{2(g)} + 2OH⁻ _{(aq)} (1)

The nanoparticles are oxidized and converted into stable, non-reactive minerals during the remediation process. The zero-valent iron dissolves in the water and then liberates the ions of the divalent Fe²⁺ iron, which then leads to the remediation. The dissolved Fe²⁺ is then oxidized to the Fe³⁺, which is precipitated in the form of non-reactive minerals, iron hydroxides (for example, FeO(OH)₍ₛ₎) having micro- and millimetre dimensions. Table 1 describes some of the remediation mechanisms for selected inorganic pollutants, which are often present in wastewater, by the use of nZVI.

| ***Pollutant*** | ***Reactions*/*Redox potential*** | ***Mechanism of remediation*** |
|---|---|---|
| **Nitrate and nitrite** | NO₃⁻ + 4Fe⁰ + 10H⁺ → 4Fe²⁺ + NH₄⁺ + 3H₂O NO₂⁻ + 4Fe⁰ + 8H⁺ → 4Fe²⁺ + NH₄⁺ + 2H₂O | An ammonium ion is formed, which is later removed by ion exchange |
| **Antimony (Sb)** | Sb + H₂O ⇆ SbO⁺ + 2H⁺ + 3e⁻ E*ₕ* = 0,21 V 2Sb₂O₃ + H₂O ⇆ 2Sb₂O₅ + 4H⁺ + 4e⁻ E*ₕ* = 0,69 V ≡FeOH⁰ + Sb(OH)₃ → ≡FeOSb(OH)₂⁰ + H₂O ≡FEOH⁰ + Sb(OH)₆⁻ → ≡FeOSb(OH)₅⁻ + H₂O | In the case that Sb(VI) is present, the reduction of Sb(V) to the form Sb(III) and adsorption to the surface ≡Fe(OH) groups |
| **Arsenic (As)** | H₃AsO₄ + 2H⁺ + 2e⁻ ⇆ HAsO₂ + H₂O E*ₕ* = 0,56 V xAs³⁺ + (1-x)Fe³⁺ + H₂O ↔ AsₓFe₍₁₋ₓ₎OOH + 3H⁺ | In the event that As(V) is present, the reduction of As(V) to the form As(III) and co-precipitation with Fe oxides |
| **Copper (Cu)** | Cu²⁺ + 2e⁻ ⇆ Cu₍ₛ₎ E*ₕ* = 0,34 V ≡FeOH + Cu²⁺ → ≡FeOCu⁺ + H+ | Reduction of Cu(II) in Cu(0) and adsorption to the surface ≡Fe(OH) groups |
| **Cadmium (Cd)** | Cd²⁺ + 2e⁻ ⇆ Cd₍ₛ₎ E*ₕ* = -0,40 V Cd²⁺ + ≡FeOH → ≡FeOCd⁺ + H⁺ Cd²⁺ + 2(≡FeOH) → ≡(FeO)₂Cd + 2H⁺ | Since the E*ₕ* of Cd is close to that of Fe⁰ the main mechanism is specific adsorption |
| **Chromium (Cr)** | CrO₄²⁻ + 8H⁺ 3e⁻ ⇆ Cr³⁺ + 4H₂O E*ₕ* = 1,51 V Cr₂O₇²⁻ + 14H⁺ + 6e⁻ ⇆ 2Cr³⁺ + 7H₂O E*ₕ* = 1,36 V xCr³⁺ + (1-x)Fe³⁺ + 3H₂O → CrₓFe₁₋ₓ(OH)₃ + 3H⁺ ≡FeOH + Cr₂O₇²⁻ → ≡Fe-Cr₂O₇⁻ + OH⁻ | In the event that Cr(VI) is present, the reduction of Cr(VI) to the less-hazardous form Cr(III), which is co-precipitated by Fe oxides or adsorption onto the surface ≡FeOH |
| **Nickel (Ni)** | Ni²⁺ + 2e⁻ ⇆ Ni E*ₕ* = -0,25 V ≡FeOH + Ni²⁺ → ≡FeO-Ni⁺ + H⁺ | Reduction of Ni(II) in Ni(0) and the adsorption onto the surface of ≡ FeOH |
| **Selenium (Se)** | HSeO₄⁻ + 3H⁺ + 2e⁻ ⇆ H₂SeO₃ + H₂O E*ₕ* = 1,15 V H₂SeO₃ + 4H⁺ + 4e⁻ ⇆ Se + 3H₂O E*ₕ* = 0,74 V ≡FeOH + SeO₃²⁻ → ≡FeSeO₃⁻ + OH⁻ | In the event that Se(VI) is present, the reduction of Se(VI) in the Se(IV) and Se(0) forms and the adsorption onto the surface of ≡FeOH |
| **Lead (Pb)** | Pb²⁺ + 2e⁻ ⇆ Pb E*ₕ* = -0,13 V ≡FeOH + Pb²⁺ → ≡FeOPb⁺ + H⁺ ≡FeOH + Pb²⁺ → =Fe(OH)₃=Pbg(OH)₂ + H⁺ | Reduction of Pb(II) to Pb(O), precipitation, adsorption of Pb(OH)₂ onto the surface of ≡ FeOH, co-precipitation on the surface of the particles |
| **Mercury (Hg)** | Hg²⁺ + 2e⁻ → Hg E*ₕ* = 0,86 V ≡FeOH + Hg²⁺ → ≡FeOHg⁺ + H⁺ ≡FeOH + Hg²⁺ → =Fe(OH)₃=Hg(OH)₂ + H⁺ | Reduction of Hg(II) in Hg(0), adsorption onto the surface ≡FeOH, co-precipitation on the surface of the particles |
| **Zinc (Zn)** | Zn²⁺ + 2e⁻ ⇆ Zn E*ₕ* = -0,76 V ≡FeOH + Zn²⁺ → ≡FeOZn⁺ + H⁺ ≡FeOH + Zn²⁺ → =Fe(OH)₃=Zn(OH)₂ + H⁺ | Precipitation of Zn(OH)_{2 (s)} or adsorption on the surface of ≡ FeOH |

The remediation of the inorganic pollutants with nZVI is carried out through surface-sorption processes and elemental iron corrosion. The latter leads to the reduction of chemical species with a redox potential higher than the potential of Fe⁰ (reactions (2) and (3)).

Fe⁰ → Fe²⁺ + 2e⁻ (E*ₕ* = -0.44 V) (2)

Fe²⁺ → Fe³⁺ + e⁻ (E*ₕ* = 0.77 V) (3)

The large specific surface area of the nanoparticles is very important for the processes of inorganic pollutant sorption. It contains a number of free binding sites that allow for highly specific adsorption and the immobilization of any metal pollutants. The pollutants, immobilized on the surface of the nanoparticles, are separated from remediated water by subsequent settling.

Fenton reactions can occur under several conditions as described in the present invention. The leading mechanism is the reaction between oxygen (dissolved in water due to mixing) and dissolved Fe²⁺ ions from nZVI (Reactions from (4) to (6)).

Fe²⁺ + O₂ → Fe³⁺ + O₂^{•-} (4)

Fe²⁺ + O₂^{•-} + H⁺ → Fe³⁺ + H₂O₂ (5)

Fe²⁺ + H₂O₂ → Fe³⁺ + OH^{•} + OH⁻ (6)

The superoxide radical O₂^{•-}, which leads to the formation of the hydrogen peroxide required for the Fenton reactions, is also formed upon the binding of organic compounds, i.e., ligands, to the surface-adsorption sites of iron nanoparticles in the form of hydroxides, i.e., ≡ FeOH (reactions from (7) to (9)).

≡FeOH + nH₂C₂O₄ → [≡Fe(C₂O₄]ₙ]⁽²ⁿ⁻³⁾⁻ + H⁺ + H₂O (7)

≡Fe(C₂O₄)₂⁻ + O₂ → ≡Fe(C₂O₄)⁺ + C₂O₄^{•-} + 2CO₂ (8)

C₂O₄^{•-} + O₂ → CO₂ + O₂^{•-} (9)

Advanced oxidation processes effectively reduce the COD and the total organic carbon (TOC) content.

The reactive oxygen species produced by the Fenton reactions also enable the disinfection of the water on the basis of chemical processes. These processes include the peroxidation of lipids, the oxidation of proteins and damage to the genetic material. The peroxidation of lipids is a mechanism for destroying cell membranes through the chain processes of radical formation. Protein oxidation is the process of amino acid oxidation and protein builders. The bonded iron atoms can, when reacting with the reactive oxygen species, produce new Fenton-like chain reactions. In addition, the oxidation of the proteins can lead to their conversion into hydrophobic forms due to cross-linking. Problems with the genetic material of the micro-organisms are the result of damage caused by the oxidation of organic bases and sugars that form the deoxyribonucleic acid and ribonucleic acid. The nanoparticles that are adsorbed onto the surface of the microorganisms can thus interfere with the functioning of the membranes and thereby penetrate the interior of the organism. There, the micro-organisms are destroyed by the disruption of the metabolic processes. This then leads to the death of the micro-organisms, disinfecting water in this way. At the same time, several types of micro-organisms can be destroyed by the nZVI.

In addition to the chemical treatments listed above, the nZVI also play a role in the physical processes of water purification. These include, for example, processes similar to flocculation. Because of the attractive electrostatic surface forces, i.e., the magnetic forces and the van der Waals forces, these nZVI quickly agglomerate or bind to the organic particles that have opposite surface charges, e.g., various organic molecules, ions and the cells of micro-organisms. The resulting micrometre-sized agglomerates sink to the bottom of the reaction tank and in this way, separate from the remaining, partially purified water.

The most important advantages of the nZVI with respect to competing chemical agents for disinfection, flocculation or water remediation are as follows:
- they do not form harmful by-products and potentially harmful compounds,
- from the environmental point of view the iron is non-hazardous, the waste slurry from the nano-remediation process is non-reactive, non-hazardous and can be recycled,
- it is relatively easy to handle the dispersions of nanoparticles and the content in the water can be traced,
- the spent nanoparticles can be separated from the remediated water, as they agglomerate into particles of micrometre size and sink to the bottom, the dissolved iron precipitates and simultaneously sinks to the bottom,
- the nano-remediation processes do not require any additional energy.

The second step in the process of the water's remediation according to the invention is purification with a solution of oxidants based on hypochlorous acid or an iron salt in six-valent form (ferrate). The purpose of this stage of remediation is oxidative degradation of organic pollutants, disinfection and the coagulation of the suspended pollutants. The source of the hypochlorous acid is a sodium dichloroisocyanurate solution NaCl₂(NCO)₃ at a concentration of ≥ 4 mg / L and ≤ 14 mg/ L, and the source of hexavalent iron is potassium ferrate K₂FeO₄ at a concentration of ≥ 25 mg / L and ≤ 50 mg / L. The concentration of the added oxidants ensures that the sum of all the microbiological pollutants of *Escherichia coli,* intestinal enterococci, *Clostridium perfringens* and coliform bacteria after the second step is equal to 0.

The source of hypochlorite or free chlorine for the purposes of water remediation is most commonly sodium hypochlorite NaOCl or sodium dichloroisocyanurate NaCl₂(NCO)₃. Just like hypochlorite also the dichloroisocyanurate forms in aqueous medium of hypochlorous acid, which has an antimicrobial properties. Potassium ferrate is very suitable for water remediation because of its oxidation power and the formation of harmless by-products, i.e., iron hydroxides. The remediation of water with ferrate covers the following processes: the oxidation of organic pollutants, coagulation, heavy-metal adsorption and disinfection.

By oxidizing the organic matter, these types of pollutants can be almost completely mineralized, which enables both disinfection based on decomposing organic microorganisms, as well as reducing the values of the COD and BOD₅ parameters. The degradation of the organic matter via ferrates can be described by the mechanisms of advanced oxidation processes. In this case there is also the elimination of hydrogen bonds, the formation of radicals, and the transitions of one or two electrons for the reduction of iron.

The coagulation process with the help of ferrate is due to the precipitation of dissolved iron in the form of iron hydroxides. After the reduction of FeO₄²⁻ to Fe³⁺, the latter quickly recovers on the surface of the suspended particles, causing them to settle and allowing their separation from the water.

Partially purified water from the oxidation process is at least one hour after the addition of the oxidant pumped over the ion-exchange system, where the ion-exchange cleansing takes place wherein the water is led through at least one layer of cation exchanger and through one layer of anion exchanger, followed by filtration through the activated carbon filters. These two stages of the remediation enable an improvement of the water's quality through the processes of removing the residual dissolved pollutants and the filtration of the fine suspended particles.

Depending on the quality of the water that flows from the nano-remediation and oxidation systems, several types of ion-exchange resins can be used, which are roughly divided into strong and weak acid cationic resins and strong and weak basic anionic resins. Their purpose is to lower the concentrations of the following ions and compounds, which, after the oxidation process, can still exceed these limits: ammonium ion (NH₄⁺) ≤ 0.5 mg / L, nitrate (NO₃⁻) ≤ 50 mg / L, nitrite (NO₂⁻) ≤ 0.5 mg / L, sulphate (SO₄²⁻) ≤ 250 mg / L, chloride (Cl⁻) ≤ 250 and Fe ≤ 200 µg / L.

Strong acidic cation resins contain a sulphonic (HSO) functional group, and so they can relatively quickly exchange most cations.

The weak acidic cation resins contain carboxylic COOH functional groups and most effectively remove cations of Ca²⁺, Mg²⁺, K⁺ and Na⁺.

Strongly basic anionic resins contain ammonium functional groups for the exchange of all types of inorganic acids (H₂SO₄, HCl, H₂SiO₃, H₃BO₃, ...) as well as nitrate at different pH values.

The weak basic anionic resins have reduced ion-exchange capabilities, especially at pH values above 6.

Porous ion-exchange resins are subjected to clogging of the pores and overgrowth with coatings of organic matter, iron hydroxides, calcium sulphate, micro-organisms and fats, which reduces their effectiveness. In the present remediation process all of these pollutants are mostly already removed in the previous steps of the nano-remediation and oxidation.

As ion exchangers, priority is given to granules of high-molecular-weight organic resins or synthetic polymers, e.g., styrene-divinylbenzene, which have a large number of functional exchange points on their surface. The latter have non-specific bound ions, which are exchanged with ions of the same charge in an aqueous medium. The number of ions that can bind to the surface determines the number of exchangeable points in a certain amount of resin. In the process of water remediation, the cationic pollutants dissolved in water are exchanged on the surface of the resins with hydrogen cations (H⁺), while the anions of the pollutants are exchanged with hydroxyl anions (OH⁻).

The preference is to use zeolites as the cation exchanger. The use of zeolites for the purpose of water remediation is similar to that of cation-exchange resins. The crystalline lattice of the zeolites creates a network of connected channels - a porous structure of approximately 0.4 to 0.7 nm in size. In the process of the remediation, the water with the dissolved pollutants diffuse into these pores. The cationic pollutants are non-specifically adsorbed to free adsorption sites or exchanged with Na⁺, K⁺, Ca²⁺ or Mg²⁺ ions. In addition, the zeolites exhibit an ability for the selective adsorption or greater affinity for the removal of certain cations (for example, a very common zeolite mineral clinoptilolite adsorbs the following cations with decreasing affinity: Pb²⁺ > Cd²⁺ > Cu²⁺ > Zn²⁺ > Ni²⁺ > Hg²⁺). The adsorption efficiency is strongly related to the pH of the water, as at low pH the protonation of free adsorption sites is taking place and the cations of the pollutants are being replaced by H⁺. For the water-purification system, the zeolite tuffs with a high zeolite content, which are crushed to a few millimetres in size (sand fraction), are the most suitable. When the exchange sites in zeolites are saturated with cationic pollutants, they can be regenerated in a similar way to synthetic ion exchangers.

For the purposes of water remediation, activated charcoal is used in various forms:
a) granular activated carbon in the form of particles between 0.2 and 5 mm in size,
b) powdered activated carbon, where the particles are less than 0.18 mm,
c) active charcoal pellets of different sizes,
d) fabrics containing fibres that have activated carbon.

The main mechanism of water remediation with the help of activated carbon is the adsorption of the pollutants from the polluted water on a large specific surface of charcoal particles and inside the pores ranging in size from 10 to 1000 Å. This activated carbon is suitable for removing organic and some organic substances from the water. In general, activated carbon is useful for the removal of high-molecular-weight pollutants, molecules with a large number of functional groups, double/triple bonds, or bonded halogen elements, and highly polar molecules. A slower flow of waterthrough an activated charcoal filter allows the more efficient removal of pollutants. The preliminary cleaning steps must effectively remove all the types of harmful micro-organisms. Otherwise, the latter might inhabit the pores of activated charcoal, which become the ideal medium for their growth and subsequent contamination of the water.

After completing the remediation stages, the water is purified to a level that is suitable for drinking and reaches the following permissible levels of inorganic pollutants, organic pollutants, microbiological pollutants and physico-chemical parameters for drinking water:

The values for inorganic pollutants: ammonium ion (NH₄⁺) ≤ 0.5 mg / L, nitrate (NO₃⁻) ≤ 50 mg / L, nitrite (NO₂⁻) ≤ 0.5 mg / L, sulphate (SO₄²⁻) ≤ 250 mg / L, Chloride (Cl⁻) ≤ 250 mg / L, Sb ≤ 5 µg / L, As ≤ 10 µg / L, Cu ≤ 2 mg / L, B ≤ 1 mg/ L, Cd ≤ 5 µg / L, Cr ≤ 50 ng / L, ≤ 10 µg / L, ≤ 10 ng / L, Pb ≤ 10 µg / L, Hg ≤ 1 µg / L, Al ≤ 200 µg / L, Mn ≤ 50 µg / L, Na ≤ 200 mg / L, Fe ≤ 200 µg / L;
values of organic pollutants: 1,2-Dichloroethane < 0.0004 mg / L, Hexachlorobenzene < 0.00001 mg / L, Hexachlorocyclohexane < 0.0001 mg / L, Lindan < 0.00001 mg / L, Endosulfan < 0.0001 mg / L, Aldrin < 0.00001 mg / L, Dieldrin < 0.00001 mg / L, Endrin < 0.00001 mg / L, Heptachlor < 0.00001 mg / L, Heptachlor epoxide cis < 0.00001 mg / L, Isodrin < 0.00001 mg / L, Pentachlorobenzene < 0.00001 mg / L, DDT (sum of o, p'-DDE, p, p'-DDE, o, p'-DDT, p, p'-DDT, o, p'-TDE and p, p'-TDE) < 0.0001 mg / L, DDT (p, p) < 0.00001 mg / L, Dicofol < 0.00001 mg / L, Pentacloronitrobenzene < 0.00001 mg / L, Teknazen < 0.00001 mg / L, Alachlor < 0,000002 mg / L, Atrazine < 0,000002 mg / L, Chlorenhynn < 0.0000007 mg / L, Chlorpyrifo- ethyl < 0.0000007 mg / L, Pendimethalin < 0.0000003 mg / L, Simazin < 0.000003 mg / L, Trifluralin < 0.0001 mg / L, S-metolachlor < 0.000003 mg / L, Terbutylazine < 0.000004 mg / L, the sum of pesticides phenylurea , bromacil, metribuzine < 0.0001 mg / L, Isoproturon < 0.000002 mg / L, Diuron < 0.000002 mg / L, Chlorotoluron < 0.000 003 mg / L;
The values for the microbiological pollutants*: Escherichia coli* 0 MPN / 100 mL, intestinal enterococci 0 MPN / 100 mL, *Clostridium perfringens* 0 CFU / 100 mL and coliform bacteria 0 MPN / 100 mL;
The conductivity of the purified water measured at 20 ° C is ≤ 2500 µS / cm, the COD parameter is ≤ 5 mg O₂ / L and the water is odourless, colour- and taste-free and without foaming potential.

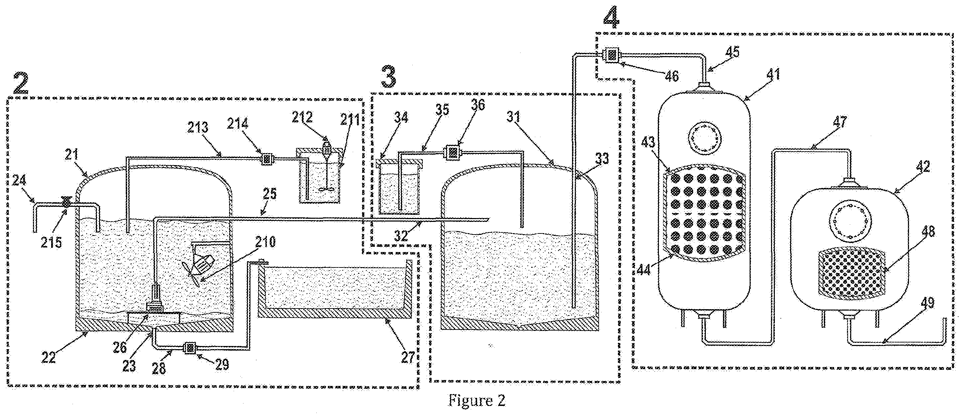

A remediation device suitable for the claimed process is shown in Figure 2.

The remediation device shown in Fig. 2, which is intended to carry out the water-remediation process according to the invention, is connected to the outflow pipe of a SBWTP. It is foreseen that the remediation device consists of a nano-remediation unit 2, an oxidation unit 3, and an ion-exchange and filtration unit 4, as shown in Fig. 2.

The nano-remediation unit 2 is composed of the following:
i) a vessel, a reaction tank or reactor 21 with a concave bottom 22, which has at its lowest point positioned an outflow 23;
ii) an inlet pipe 24 with an electronically controlled valve 215, which is hydraulically connected to the outflow of the SBWTP, which is always available, and extends into the interior of the reactor 21;
iii) the outflow pipe 25, which is positioned outside the reactor 21, is hydraulically connected to the oxidation tank 3, while the end thereof is inside the reactor 21, hydraulically connected to the pump 26, for the pumping of partially purified water from the reactor 21, which is arranged at a distance from the bottom 22 of the reactor 21 above the outflow opening 23 at the bottom 22;
iv) a container for temporary collection of slurry 27 containing the nZVI with bound pollutants is positioned outside the reactor 21, and is hydraulically connected to the outflow 23 in the bottom 22 of the reactor 21 through the pipe 28 in which the pump 29 is installed;
v) a stirrer 210 is arranged inside the reactor 21 at a distance from its bottom 22; as well as
vi) a storage container for the stock suspension of nZVI 211 is installed, which is equipped with a stirrer 212 and is cooled, and via the pipe 213 with the pump 214, hydraulically connected to the interior of the reactor 21.

The oxidation unit 3 is composed of the following:
i) a vessel designed as a reaction tank or reactor 31;
ii) an inlet pipe 32, which is hydraulically connected to the outflow pipe 25 of the nano-remediation unit 2;
iii) an outflow pipe 33, on one side extending into the interior of reactor 31, the other side extending out of the reactor 31;
iv) a temporary storage container 34 for stock of the oxidant solution is positioned outside the reactor 31, which is via pipe 35 in which a pump 36 is installed, hydraulically connected to the inside of the reactor 31.

The ion-exchange and filtration unit 4 is composed of the following:
i) an ion exchanger 41 and a filter assembly 42 designed in the form of a vessels;
ii) the ion exchanger 41 includes a layer of the cation exchanger 43 and the anion exchanger layer 44, and the ion exchanger 41 is on one side via the inflow pipe 45 in which the pump 46 is installed and which, according to the position of layers 43 and 44, is located on one of its ends, hydraulically coupled to the outflow pipe 33 of the oxidation unit 3, and on the other side it is hydraulically connected to the filtration assembly 42 via an outflow pipe 47, which, with respect to said layers 43 and 44, is positioned at its opposite end;
iii) the filtration assembly 42 includes a vessel in which the activated charcoal 48 is mounted and which is hydraulically connected to the ion exchanger 41 at one end via the discharge pipe 47 and is equipped with an outflow pipe 49 to establish the hydraulic connection of the remediation device with, in each case, available water-supply systems, wherein the filtration assembly 42 includes at least one layer of granular activated carbon 48.

As mentioned above, in the process of water remediation the nano-remediation is carried out in reactor 21. Into it is pumped water that flows out of a SBWTP. The feed of partially purified water from a SBWTP is optimally controlled so as to enable the first reaction tank 21 to be filled with a determined amount of water at precisely determined intervals. When the first reaction tank 21 is filled, the flow of water through the inlet pipe 24 is stopped by the electronically controlled valve 215, then the nano-remediation process begins. At the end of the nano-remediation, the reaction tank 2 is emptied and a new cycle of filling and nano-remediation can begin. The suspension dosing system for the nZVI consists of an nZVI 211 stock suspension container with a stirrer 212, a pump 214, and a pipe 213 connected to the first reactor 21. In order to provide a shelf life of at least 30 days, it must be stored at a temperature of 4-8 °C. The nZVI 211 stock suspension container must be resistant to alkalis, since the suspension is greater than 10 and is sealed to maintain a reducing atmosphere or conditions that make it stable and prevent the passivation of nanoparticles. In addition, a stirrer 212 must be fitted, which is turned on just prior to dosing the suspension, in order to achieve an even, uniform dispersion of nZVI. The dosing system is controlled to purify a predetermined amount of suspension from the container 211 to the reactor 21 when it is filled with a certain amount of water fed through the outflow of a SBWTP via an inlet pipe 24, which is opened by an electronically controlled valve 215. The first reaction tank 21 is equipped with a submersible stirrer 210 that is controlled to activate immediately after the addition of the nZVI suspension. The stirrer 210 creates a homogeneous arrangement of nanoparticles. The pump 26 located at a distance from the bottom 22 of the reactor 21, i.e., above the predicted maximum slurry level, is designed to pump water from the reactor 21 to the second reactor 31. It is controlled so as to activate at the end of the predicted settling period and the entire amount of partially remediated water is pumped into the second reactor 31.

The system for discharging the waste slurry from the nano-remediation process is a pump 29 that allows the slurry to be pumped from the first reactor 21 to the container for temporary collection of slurry 27. The slurry drainage is activated after the partially remediated water is pumped from the first reactor 21 after the completion of the nano-remediation process.

The second reactor 31 is intended for the remediation of water with oxidizing agents. An accurately determined quantity of sodium dichloroisocyanurate or potassium ferrate solution is automatically added to a precisely determined quantity of water. Because of its hygroscopic properties, the potassium ferrate must be protected from humidity in the air. This is followed by 1 hour of standstill, which is the shortest time that still allows effective oxidation. The water purified in this process step is then pumped to the final stage of the remediation system.

The partially purified water begins to pump through the ion exchanger and the carbon filter after the completion of the oxidation-remediation process. In this case a pressure pump 46 is provided that enables the pumping of water from the second reactor 31. At the same time, this pump 46 provides a uniform flow through the container 41 using ion exchangers 43, 44 and the granular activated carbon 48 container 42, where a pressure drop can occur to stop the flow.

The ion exchange unit consists of an ion exchanger 41, where in the different layers there are different cation exchangers 43 and anionic exchangers 44. These can also, in principle, be arranged in two consecutive, connected, separate columns for the separate removal of cations and anions. For the removal of some cationic pollutants, zeolites, natural ion exchangers, can be used as they are cheaper and more efficient than artificial ion-exchange resins.

The parameters to be taken into account during the ion-exchange process are the conductivity of the water at the inlet (the measurement of the presence of dissolved pollutants in water), the total flow, the pressure drop through the exchange column, the content of the substance that can affect the performance of the resins (organic matter and sodium, pH, etc.). The ion-exchange efficiency must be monitored regularly to determine the degree of saturation of the ion exchanger and determine the start of its regeneration.

The most efficient use of ion exchangers is in the form of columns, which is also provided for in the process and the device that form the parts of the invention. The columns are fixed as layers through which the water strains. The column contains a support system for layers of ion exchangers, a regeneration granule regeneration space, nozzles for the uniform distribution of the water supply or regeneration reagents, and a separate line for the flow of water and the reagents for the regeneration.

The ion exchange is followed by filtration with activated charcoal. In the case when the pressure drop in the ion exchanger 41 is too high, the activated charcoal filtering unit 42 must be equipped with a pressure pump to allow for optimal flow.

When planning an activated charcoal-based filtration system, the following parameters and variables must be considered:
1) the process conditions (concentration of the target pollutants, temperature, pH, flow rate, pressure drop),
2) the characteristics of the pollutants (relative molecular mass, solubility, concentration with respect to the limit values, polarity of molecules, temperature changes),
3) selection of suitable activated carbon (adsorption isotherm or capacity, optimal activity, price and possibility of thermal regeneration).

The present invention therefore solves the initial problem of water remediation, i.e., the purification of municipal wastewater from households, previously partially purified by a SBWTP, so that the water achieves the appropriate quality for drinking or for industrial purposes. The device suitable for the claimed process also includes a closed return loop or water supply for returning the purified water to the consumers for the purpose of re-use. Using the process, according to the invention, purified water can be used for a variety of purposes, especially, for example, making of concrete, firefighting, maintaining public infrastructure and irrigation. This will therefore reduce the consumption of natural resources.

## Claims

1. A method for remediation of water from small biological wastewater treatment plants SBWTPs, wherein municipal wastewater from households is first partially purified in a SBWTP to contain in an outflow from the SBWTP the maximum permissible values of inorganic pollutants: ammonium ion (NH₄⁺) ≤ 40 mg / L, nitrate (NO₃⁻) ≤ 20 mg / L, nitrite (NO₂⁻) ≤ 1.0 mg / L, sulphate (SO₄²⁻) ≤ 30 mg / L, phosphate (PO₄²⁻) ≤ 10 mg / L; the highest average annual microbial content: *Escherichia coli* ≤ 130,000 MPN / 100 mL, intestinal enterococci ≤ 250,00 MPN / 100 mL, *Clostridium perfringens* ≤ 850 CFU / 100 mL, coliform bacteria ≤ 700,000 MPN / 100 mL; the chemical oxygen demand (COD) is ≤ 150 mg O₂ / L, the biochemical oxygen demand (BOD₅) is ≤ 30 mg O₂ / L; the conductivity measured at 20 ° C is ≤ 9000 µS / cm, **characterized in that** the method includes the following steps:
i) nano-remediation, where a suspension of zero valent Fe⁰ particles nZVI is added to the partly purified water brought directly from the SBWTP to a reactor (21), wherein the concentration of nZVI in the water is ≥ 0.25 and ≤2 g / L, the individual nZVI particle has a specific surface area of at least 25 m² / g, its average size does not exceed 80 nm and a weight fraction of nZVI in the suspension is 20 % and the nanoparticles contain at least 80 wt. % of the reactive Fe⁰ component, followed by mixing for a duration of ≥ 6 and ≤ 10 hours and then settling of a slurry containing nZVI with bound inorganic, organic and microbiological pollutants for a duration of ≥ 3 and ≤ 10 hours, whereby the slurry is being separated from the water and taken to a container (27) and whereby partially purified water is fed to a further reactor (31);
ii) purification with a solution of oxidants based on a hypochlorous acid or an iron salt in six-valent form, wherein at least one oxidant is added to the partially remediated water from step i) which still contains a concentration of nZVI ≤10 mg / L and the water is retained in the reactor (31) at least one hour after the addition of the oxidant to the reactor (31), whereby the remaining organic pollutants being oxidatively decomposed, suspended pollutants coagulate, water is disinfected, so the value for the microbiological pollutants *Escherichia coli,* intestinal enterococci, and coliform bacteria is equal to 0 MPN / 100 mL and the value for *Clostridium perfringens* is 0 CFU / 100 mL;
iii) purification of water from step ii) by ion exchange, wherein the water is led through at least one layer of a cation exchanger (43) and through at least one layer of an anion exchanger (44);
iv) filtration of water from step iii) carried out by passing water through at least one layer of activated carbon (48) including granular activated carbon,
wherein in step iii) and step iv) the residual dissolved pollutants and fine suspended particles are removed from the water.

2. The method according to claim 1, **characterized in that** the oxidant in step ii) is a solution of sodium dichloroisocyanurate C₃Cl₂N₃NaO₃, whose concentration in water is ≥ 4 and ≤ 14 mg / L or potassium ferrate K₂FeO₄, whose concentration in water is ≥ 25 mg / L and ≤ 50 mg / L.

3. The method according to claim 1, **characterized in that** zeolite is used as a cation exchanger (43) in step iii) purification by ion exchange.

4. The method according to claims 1-3, **characterized in that** the purified water achieves the following permissible values of inorganic pollutants, organic pollutants, microbiological pollutants and physicochemical parameters for drinking water:
values of the inorganic pollutants: ammonium ion (NH₄⁺) ≤ 0.5 mg / L, nitrate (NO₃⁻) ≤ 50 mg / L, nitrite (NO₂⁻) ≤ 0.5 mg / L, sulfate (SO₄²⁻) ≤ 250 mg / L, Chloride (Cl⁻) ≤ 250 mg / L, Sb ≤ 5 µg / L, As ≤ 10 µg / L, Cu ≤ 2 mg / L, B ≤ 1 mg / L, Cd ≤ 5 µg / L, Cr ≤ 50 µg / L, ≤ 10 µg / L, ≤ 10 µg / L, Pb ≤ 10 µg / L, Hg ≤ 1 µg / L, Al ≤ 200 µg / L, Mn ≤ 50 µg / L, Na ≤ 200 mg / L, Fe ≤ 200 µg / L;
values of organic pollutants: 1,2-Dichloroethane < 0.0004 mg / L, Hexachlorobenzene < 0.00001 mg / L, Hexachlorocyclohexane < 0.0001 mg / L, Lindan < 0.00001 mg / L, Endosulfan < 0.0001 mg / L, Aldrin < 0.00001 mg / L, Dieldrin < 0.00001 mg / L, Endrin < 0.00001 mg / L, Heptachlor < 0.00001 mg / L, Heptachlor epoxide cis < 0.00001 mg / L, Isodrin < 0.00001 mg / L, Pentachlorobenzene < 0.00001 mg / L, DDT (sum of o,p'-DDE, p,p'-DDE, o,p'-DDT, p,p'-DDT, o,p'-TDE and p,p'-TDE) < 0.0001 mg / L, DDT (p, p) < 0.00001 mg / L, Dicofol < 0.00001 mg / L, Pentacloronitrobenzene < 0.00001 mg / L, Teknazen < 0,00001 mg / L, Alachlor < 0.000002 mg / L, Atrazine < 0.000002 mg / L, Chlorenhynn < 0.0000007 mg / L, Chlorpyrifo- ethyl < 0.0000007 mg / L, Pendimethalin < 0.0000003 mg / L, Simazin < 0.000003 mg / L, Trifluralin < 0.0001 mg / L, S-metolachlor < 0.000003 mg / L, Terbutylazine < 0.000004 mg / L, the sum of pesticides phenylurea , bromacil, metribuzine < 0.0001 mg / L, Isoproturon < 0.000002 mg / L, Diuron < 0.000002 mg / L, Chlorotoluron < 0.000 003 mg / L;
values of microbiological pollutants: *Escherichia coli* 0 most probable number (MPN) / 100 mL, intestinal enterococci 0 MPN) / 100 mL, *Clostridium perfringens* 0 colony forming units (CFU) / 100 mL and coliform bacteria 0 MPN / 100 mL; the conductivity of the purified water measured at 20 ° C is ≤ 2500 µS / cm, the chemical oxygen demand (COD) parameter is ≤ 5 mg O₂/L and the water is odourless, colour- and taste-free, clear and without the tendency to foam.

## Patentansprüche

1. Verfahren zur Aufbereitung von Wasser aus kleinen biologischen Abwasserbehandlungsanlagen SBWTPs, wobei kommunales Abwasser aus Haushalten zunächst in einem SBWTP teilweise gereinigt wird, damit nur die maximal zulässigen Werte anorganischer Schadstoffe in einem Abfluss aus dem SBWTP enthalten sind: Ammoniumion (NH₄⁺) ≤ 40 mg/L, Nitrat (NO₃⁻) ≤ 20 mg/L, Nitrit (NO₂⁻) ≤ 1,0 mg/L, Sulfat (SO₄²⁻) ≤ 30 mg/L, Phosphat (PO₄²⁻) ≤ 10 mg/L; der höchste durchschnittliche jährliche mikrobielle Gehalt: *Escherichia coli* ≤ 130.000 WA/100 mL, intestinale Enterococci ≤ 250.00 WA/100 mL, *Clostridium perfringens* ≤ 850 KBE/100 mL, Coliform-Bakterien ≤ 700.000 WA/100 mL; der chemische Sauerstoffbedarf (CSB) beträgt ≤ 150 mg O₂/L, der biochemische Sauerstoffbedarf (BSB₅) beträgt ≤ 30 mg O₂/L; eine Leitfähigkeit, gemessen bei 20 ° C beträgt ≤ 9000 µS / cm, **dadurch gekennzeichnet, dass** das Verfahren die folgenden Schritte umfasst:
i) Nano-Remediation, wobei dem teilweise gereinigten Wasser, das direkt vom SBWTP in einen Reaktor (21) eingebracht wird, eine Suspension von nullwertigen Fe⁰-Partikeln nZVI zugesetzt wird, wobei die Konzentration von nZVI im Wasser ≥ 0,25 und ≤2 g/L ist, das einzelne nZVI-Partikel weist eine spezifische Oberfläche von mindestens 25 m²/g auf, dessen durchschnittliche Größe 80 nm nicht übersteigt und einen Gewichtsanteil von nZVI in der Suspension 20 % beträgt und die Nanopartikel mindestens 80 Gew.-% der reaktiven Fe⁰-Komponente enthalten, gefolgt von einem Durchmischen, für die Dauer von ≥ 6 und ≤ 10 Stunden und anschließendes Absetzen einer nZVI enthaltenden Aufschlämmung mit gebundenen anorganischen, organischen und mikrobiologischen Schadstoffen für die Dauer von ≥ 3 und ≤ 10 Stunden, wodurch die Aufschlämmung vom Wasser getrennt und einem Behälter (27) zugeführt wird und wodurch teilgereinigtes Wasser einem weiteren Reaktor (31) zugeführt wird;
ii) Reinigung mit einer Lösung von Oxidationsmitteln auf der Basis einer hypochlorigen Säure oder eines Eisensalzes in sechswertiger Form, wobei dem teilweise aufbereiteten Wasser aus Schritt i) mindestens ein Oxidationsmittel zugesetzt wird, das noch eine Konzentration von nZVI ≤ 10 mg/L enthält und das Wasser mindestens eine Stunde nach Zugabe des Oxidationsmittels zum Reaktor (31), im Reaktor (31) zurückgehalten wird, wobei die verbleibenden organischen Schadstoffe oxidativ zersetzt werden, suspendierte Schadstoffe koagulieren, das Wasser wird desinfiziert, so dass der Wert für die mikrobiologischen Schadstoffe *Escherichia coli,* intestinale Enterococci und coliforme Bakterien gleich 0 WA/100 mL ist und der Wert für *Clostridium perfringens* 0 KBE/100 mL beträgt;
iii) Reinigung des Wassers aus Schritt ii) durch lonenaustausch, wobei das Wasser durch mindestens eine Schicht eines Kationenaustauschers (43) und durch mindestens eine Schicht eines Anionenaustauschers (44) geleitet wird;
iv) Filtration des Wassers aus Schritt iii) erfolgt durch Durchleiten des Wassers durch mindestens eine Schicht aus Aktivkohle (48), die körnige Aktivkohle beinhaltet,
wobei in Schritt iii) und Schritt iv) die restlichen gelösten Schadstoffe und feinsuspendierte Partikel aus dem Wasser entfernt werden.

2. Verfahren nach Anspruch 1, **dadurch gekennzeichnet, dass** das Oxidationsmittel in Schritt ii) eine Lösung von Natriumdichlorisocyanurat C₃Cl₂N₃NaO₃ ist, dessen Konzentration in Wasser ≥ 4 und ≤ 14 mg/L beträgt, oder Kaliumferrat K₂FeO₄ ist, dessen Konzentration in Wasser ≥ 25 mg/L und ≤ 50 mg/L beträgt.

3. Verfahren nach Anspruch 1, **dadurch gekennzeichnet, dass** als Kationenaustauscher (43) in Schritt iii) eine Reinigung durch lonenaustausch eingesetzt wird.

4. Verfahren nach den Ansprüchen 1 bis 3, **dadurch gekennzeichnet, dass** das gereinigte Wasser die folgenden zulässigen Werte von anorganischen Schadstoffen, organischen Schadstoffen, mikrobiologischen Schadstoffen und physikalisch-chemischen Parametern für Trinkwasser erreicht:
Werte der anorganischen Schadstoffe: Ammoniumion (NH₄⁺) ≤ 0,5 mg/L, Nitrat (NO₃⁻) ≤ 50 mg/L, Nitrit (NO₂⁻) ≤ 0,5 mg/L, Sulfat (SO₄²⁻) ≤ 250 mg/L, Chlorid (Cl⁻) ≤ 250 mg/L, Sb ≤ 5 µg/L, As ≤ 10 µg/L, Cu ≤ 2 mg/L, B ≤ 1 mg/L, Cd ≤ 5 µg/L, Cr ≤ 50 µg/L, ≤ 10 µg/L, ≤ 10 µg/L, Pb ≤ 10 µg/L, Hg ≤ 1 µg/L, Al ≤ 200 µg/L, Mn ≤ 50 µg/L, Na ≤ 200 mg/L, Fe ≤ 200 µg/L;
Werte organischer Schadstoffe: 1,2-Dichloroethan < 0,0004 mg/L, Hexachlorobenzen < 0,00001 mg/L, Hexachlorocyclohexan < 0,0001 mg/L, Lindan < 0,00001 mg/L, Endosulfan < 0,0001 mg/L, Aldrin < 0,00001 mg/L, Dieldrin < 0,00001 mg/L, Endrin < 0,00001 mg/L, Heptachlor < 0,00001 mg/L, Heptachlor epoxid cis < 0,00001 mg/L, Isodrin < 0,00001 mg/L, Pentachlorobenzen < 0,00001 mg/L, DDT (Summe von o,p'-DDE, p,p'-DDE, o,p'-DDT, p,p'-DDT, o,p'-TDE und p,p'-TDE) < 0,0001 mg/L, DDT (p, p) < 0,00001 mg/L, Dicofol < 0,00001 mg/L, Pentacloronitrobenzen < 0,00001 mg/L, Teknazen < 0,00001 mg/L, Alachlor < 0,000002 mg/L, Atrazin < 0,000002 mg/L, Chlorenhynn < 0,0000007 mg/L, Chlorpyrifoethyl < 0,0000007 mg/L, Pendimethalin < 0,0000003 mg/L, Simazin < 0,000003 mg/L, Trifluralin < 0,0001 mg/L, S-Metolachlor < 0,000003 mg/L, Terbutylazin < 0,000004 mg/L, Die Summe der Pestizide Phenylharnstoff, Bromacil, Metribuzin < 0,0001 mg/L, Isoproturon < 0,000002 mg/L, Diuron < 0,000002 mg/L, Chlorotoluron < 0,000 003 mg/L;
Werte mikrobiologischer Schadstoffe: *Escherichia coli* 0 wahrscheinlichste Anzahl (WA)/100 mL, intestinale Enterococci 0 (WA)/100 mL, *Clostridium perfringens* 0 koloniebildende Einheiten (KBE)/100 mL und Coliform-Bakterien 0 WA/100 mL; die Leitfähigkeit des gereinigten Wassers gemessen bei 20 °C beträgt ≤ 2500 µS/cm, der chemische Sauerstoffbedarf (CSB)-Parameter ist ≤ 5 mg O₂/L und das Wasser ist geruchlos, farb- und geschmacksfrei, klar und ohne Schaumneigung.

## Revendications

1. Procédé d'assainissement de l'eau provenant de petites installations de traitement biologique des eaux usées SBWTP, dans lequel des eaux usées municipales provenant de ménages sont tout d'abord partiellement épurées dans une SBWTP pour contenir, dans un flux sortant de la SBWTP, les valeurs maximales admissibles de polluants inorganiques : ion ammonium (NH₄⁺) ≤ 40 mg/L, nitrate (NO₃⁻) ≤ 20 mg/L, nitrite (NO₂⁻) ≤ 1,0 mg/L, sulfate (SO₄²⁻) ≤ 30 mg/L, phosphate (PO₄²⁻) ≤ 10 mg/L; la teneur microbienne annuelle moyenne la plus élevée : *Escherichia coli* ≤ 130 000 NPP/100 mL, entérocoques intestinaux ≤ 250 00 NPP/100 mL, *Clostridium perfringens* ≤ 850 UFC/100 mL, bactéries conformes ≤ 700 000 NPP/100 mL ; la demande chimique en oxygène (DCO) est ≤ 150 mg O₂/L, la demande biochimique en oxygène (DBO₅) est ≤ 30 mg O₂/L ; la conductivité mesurée à 20 °C est ≤ 9000 µS/cm, **caractérisé en ce que** ledit procédé comprend les étapes suivantes :
i) la nano-remédiation, dans laquelle une suspension de particules de Fe⁰ zéro-valent nZVI est ajoutée à l'eau partiellement épurée amenée directement de la SBWTP à un réacteur (21), la concentration de nZVI dans l'eau étant ≥ 0,25 et ≤ 2 g/L, la particule nZVI individuelle ayant une surface spécifique d'au moins 25 m²/g, sa taille moyenne ne dépassant pas 80 nm et la fraction pondérale de nZVI dans la suspension étant de 20 % et les nanoparticules contenant au moins 80 % en poids du composant Fe⁰ réactif, suivi par un mélange pendant une durée ≥ 6 et ≤ 10 heures puis par la sédimentation d'une boue contenant du nZVI avec des polluants inorganiques, organiques et microbiologiques liés pendant une durée ≥ 3 et ≤ 10 heures, moyennant quoi la boue est séparée de l'eau et transportée vers un récipient (27) et l'eau partiellement épurée étant introduite dans un autre réacteur (31) ;
ii) l'épuration avec une solution d'oxydants à base d'un acide hypochloreux ou d'un sel de fer sous forme hexavalente, au moins un oxydant étant ajouté à l'eau partiellement assainie provenant de l'étape i) qui contient encore une concentration de nZVI ≤ 10 mg/L et l'eau est retenue dans le réacteur (31) au moins une heure après l'ajout de l'oxydant dans le réacteur (31), les polluants organiques résiduels étant décomposés par oxydation, les polluants en suspension coagulés, l'eau étant désinfectée, de sorte que la valeur des polluants microbiologiques *Escherichia Coli,* des entérocoques intestinaux et des bactéries conformes est égale à 0 NNP/100 mL et la valeur pour *Clostridium Perfringens* est de 0 UFC/100 mL;
iii) l'épuration de l'eau de l'étape ii) par échange d'ions, l'eau étant transportée à travers au moins une couche d'échangeur de cations (43) et à travers au moins une couche d'échangeur d'anions (44) ;
iv) la filtration de l'eau de l'étape iii) réalisée par le passage de l'eau à travers au moins une couche de charbon actif (48) comprenant du charbon actif granulé,
dans l'étape iii) et l'étape iv), les polluants dissous résiduels et les fines particules en suspension sont éliminés de l'eau.

2. Procédé selon la revendication 1, **caractérisé en ce que** l'oxydant à l'étape ii) est une solution de dichloroisocyanurate de sodium C₃Cl₂N₃NaO₃, dont la concentration dans l'eau est ≥ 4 et ≤ 14 mg/L ou de ferrate de potassium K₂FeO₄, dont la concentration dans l'eau est ≥ 25 mg/L et ≤ 50 mg/L.

3. Procédé selon la revendication 1, **caractérisé en ce qu'**une zéolithe est utilisée comme échangeur de cations (43) dans l'étape iii) d'épuration par échange d'ions.

4. Procédé selon les revendications 1-3, **caractérisé en ce que** l'eau épurée atteint les valeurs admissibles suivantes de polluants inorganiques, de polluants organiques, de polluants microbiologiques et de paramètres physico-chimiques pour l'eau potable :
valeurs des polluants inorganiques : ion ammonium (NH₄⁺) ≤ 0,5 mg/L, nitrate (NO₃⁻) ≤ 50 mg/L, nitrite (NO₂⁻) ≤ 0,5 mg/L, sulfate (SO₄²⁻) ≤ 250 mg/L, chlorure (Cl⁻) ≤ 250 mg/L, Sb ≤ 5 µg/L, As ≤ 10 µg/L, Cu ≤ 2 mg/L, B ≤ 1 mg/L, Cd ≤ 5 µg/L, Cr ≤ 50 µg/L, ≤ 10 µg/L, ≤ 10 µlg/L, Pb ≤ 10 µg/L, Hg ≤ 1 µg/L, Al ≤ 200 µg/L, Mn ≤ 50 µg/L, Na ≤ 200 mg/L, Fe ≤ 200 µg/L ;
valeurs des polluants organiques : 1,2-dichloroéthane < 0,0004 mg/L, hexachlorobenzène < 0,00001 mg/L, hexachlorocyclohexane < 0,0001 mg/L, lindan < 0,00001 mg/L, endosulfan < 0,0001 mg/L, aldrine < 0,00001 mg/L, dieldrine < 0,00001 mg/L, endrine < 0,00001 mg/L, heptachlore < 0,00001 mg/L, heptachlore époxide cis < 0,00001 mg/L, isodrine < 0,00001 mg/L, pentachlorobenzène < 0,00001 mg/L, DDT (somme de o,p'-DDE, p,p'-DDE, o,p'-DDT, p,p'-DDT, o,p'-TDE et p,p'-TDE) < 0,0001 mg/ L, DDT (p, p) < 0,00001 mg/L, dicofol < 0,00001 mg/L, pentacloronitrobenzène < 0,00001 mg/L, tecnazène < 0,00001 mg/L, alachlore < 0,000002 mg/L, atrazine < 0,000002 mg/L, chlorenhynn < 0,0000007 mg/L, chlorpyrifoéthyle < 0,0000007 mg/L, Pendiméthaline < 0,0000003 mg/L, Simazin < 0,000003 mg/L, Trifluraline < 0,0001 mg/L, S-métolachlore < 0,000003 mg/L, terbutylazine < 0,000004 mg/L, la somme des pésticides phénylurée, bromacil, métribuzine < 0,0001 mg/L, isoproturon < 0,000002 mg/L, diuron < 0,000002 mg/L, chlorotoluron < 0,000003 mg/L ;
valeurs de polluants microbiologiques : *Escherichia coli* 0 nombre le plus probable (NPP) /100 mL, entérocoques intestinaux 0 (NPP) /100 mL, *Clostridium perfringens* 0 unités formant des colonies (UFC)/100 mL et bactéries conformes 0 NNP/100 mL ; la conductivité de l'eau épurée mesurée à 20 °C est ≤ 2500 µS/cm, le paramètre de la demande chimique en oxygène (DCO) est ≤ 5 mg O₂/L et l'eau est inodore, sans couleur et sans goût, claire et n'a pas tendance à mousser.
